(19) Europäisches Patentamt
European Patent Office
Office européen des brevets

(11) EP 2 395 037 A1

(12) **EUROPEAN PATENT APPLICATION**
published in accordance with Art. 153(4) EPC

(43) Date of publication:
**14.12.2011 Bulletin 2011/50**

(21) Application number: **10738518.9**

(22) Date of filing: **02.02.2010**

(51) Int Cl.:
***C08G 18/44** (2006.01)* ***C08G 18/00** (2006.01)*
***C08G 18/66** (2006.01)*

(86) International application number:
**PCT/JP2010/051433**

(87) International publication number:
**WO 2010/090186 (12.08.2010 Gazette 2010/32)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **06.02.2009 JP 2009025983**

(71) Applicant: **Ube Industries, Ltd.**
**Ube-shi**
**Yamaguchi 755-8633 (JP)**

(72) Inventors:
- **WATANABE, Masahiko**
**Ube-shi**
**Yamaguchi 755-8633 (JP)**
- **TAKIGAWA, Shinya**
**Ube-shi**
**Yamaguchi 755-8633 (JP)**
- **TAKAHASHI, Manabu**
**Ube-shi**
**Yamaguchi 755-8633 (JP)**

(74) Representative: **Gille Hrabal Struck Neidlein Prop Roos**
**Patentanwälte**
**Brucknerstrasse 20**
**40593 Düsseldorf (DE)**

(54) **POLYURETHANE RESIN AQUEOUS DISPERSION AND MANUFACTURING METHOD THEREOF**

(57) Disclosed are a polyurethane resin aqueous dispersion of, as dispersed in an aqueous medium, a polyurethane resin obtained through reaction of a polycarbonate polyol (a) at least having a recurring unit represented by the following formula (1) and a polyisocyanate compound (d), and a method for producing the polyurethane resin aqueous dispersion.

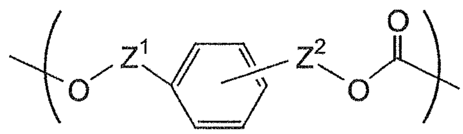

(1)

(wherein $Z^1$ and $Z^2$ each independently represent a divalent aliphatic hydrocarbon group having from 1 to 10 carbon atoms and optionally having a substituent).

EP 2 395 037 A1

## Description

[Technical Field]

The present invention relates to a polyurethane resin aqueous dispersion and its production method.

[Background Art]

Like polyester polyol and polyether polyol, polycarbonate polyol is useful as a starting material in producing polyurethane resins as reacted with a polyisocyanate compound, and is also useful as a starting material for engineering plastics, adhesives, coating compositions, etc. Here, polyester polyol has an ester bond, and therefore the polyurethane resin produced by using it is defective in that the hydrolysis resistance thereof is poor; while polyether polyol has an ether bond, and therefore the polyurethane resin produced by using it is defective in that the weather resistance and the heat resistance thereof are poor.
As opposed to these, polycarbonate polyol having a recurring unit represented by -[O-R-O(CO)]- (wherein R represents a divalent hydrocarbon group) are free from the above defects, and the polyurethane resin produced by using the polycarbonate polyol has the advantages in that it is excellent in hydrolysis resistance, weather resistance, heat resistance and others and is easy to produce industrially.
Patent Reference 1 discloses an aqueous dispersion-type polycarbonate-based polyurethane resin composition in which a polycarbonate polyol prepared by using an aliphatic polyol is used as the starting material, saying that the composition is excellent in film formability, lightfastness, heat resistance, hydrolysis resistance, and oil resistance. However, when an aliphatic polyol alone is used, there exists a problem in that the hardness of the coating film to be formed is not sufficient in the field of paints or coating agents, for example, for outer panels for aircrafts, motorcars and the like, and for exterior walls, floor materials and others for housings, etc.
Patent Reference 2 discloses a polyurethane resin aqueous dispersion comprising an alicyclic structure-having polyol for improving the physical properties of the coating film thereof, in which, however, the alicyclic structure-having polyol used worsens the dispersibility thereof in an aqueous medium, therefore bringing about a problem in that the handlability and the stability of the dispersion are insufficient.
[Patent Reference 1] JP-A 10-120757
[Patent Reference 2] JP-A 6-248046

[Disclosure of the Invention]

[Problems that the Invention is to Solve]

It is an object of the present invention to provide a polyurethane resin aqueous dispersion excellent in the dispersibility thereof in an aqueous medium and excellent in the hardness of the coating film thereof formed by coating and drying, and to provide a method for producing it.

[Means for Solving the Problems]

The present inventors have found that use of a polyurethane resin obtained by the use of a polycarbonate polyol having a specific recurring unit solves the above-mentioned problems.
Specifically, the present invention provides the following [1] and [2].

[1] A polyurethane resin aqueous dispersion of, as dispersed in an aqueous medium, a polyurethane resin obtained through reaction of a polycarbonate polyol (a) at least having a recurring unit represented by the following formula (1) and a polyisocyanate compound (d).

[Chemical Formula 1]

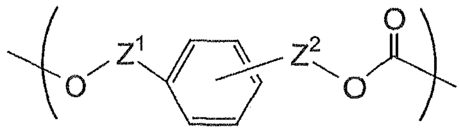

(1)

(wherein $Z^1$ and $Z^2$ each independently represent a divalent aliphatic hydrocarbon group having from 1 to 10 carbon atoms and optionally having a substituent).

[2] A method for producing a polyurethane resin aqueous dispersion of the above [1], including the following steps (1) to (3):

Step (1) : a step of reacting a polycarbonate polyol (a) at least having a recurring unit represented by the following formula (1), an acid group-containing polyol (b), and a polyisocyanate compound (d) to give a polyurethane prepolymer (A);
Step (2): a step of neutralizing the acid group of the polyurethane prepolymer (A);
Step (3): a step of dispersing the polyurethane prepolymer (A) in an aqueous medium.

[Advantage of the Invention]

The polyurethane resin aqueous dispersion of the present invention is excellent in the dispersibility thereof in an aqueous medium and especially excellent in the strength of the coating film thereof formed by coating and drying, and has hydrolysis resistance, durability, heat resistance and abrasion resistance.
According to the production method of the present invention, the polyurethane resin aqueous dispersion having the above-mentioned characteristics can be produced efficiently.

[Best Mode for Carrying out the Invention]

[Polyurethane Resin Aqueous Dispersion]

The polyurethane resin aqueous dispersion of the present invention is **characterized in that** a polyurethane resin obtained through reaction of a polycarbonate polyol (a) at least having a recurring unit represented by the above-mentioned formula (1) and a polyisocyanate compound (d) is dispersed in an aqueous medium.
Preferably, the polyurethane resin is obtained through further reaction with a chain extender (B). Preferably, it is obtained through reaction of a polycarbonate polyol (a) having a recurring unit represented by the above-mentioned formula (1), an acid group-containing polyol (b), a polyisocyanate compound (d) and a chain extender (B).
The ingredients for use in the polyurethane resin aqueous dispersion of the present invention are described below.

<Polycarbonate Polyol (a)>

In the present invention, used is a polycarbonate polyol (a) at least having a recurring unit represented by the following formula (1).
As the polycarbonate polyol (a), preferably mentioned are (i) a polycarbonate polyol (a-1) having, as the main constituent thereof, a recurring unit represented by the following formula (1), and (ii) a polycarbonate polyol (a-2) having a recurring unit represented by the following formula (1) and a recurring unit represented by the following formula (3).
In this specification, the polycarbonate polyol (a-1) and the polycarbonate polyol (a-2) may be collectively referred to as a polycarbonate polyol (a) or as an ingredient (a).

[Chemical Formula 2]

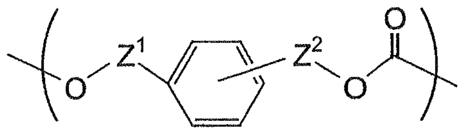 (1)

(wherein $Z^1$ and $Z^2$ each independently represent a divalent aliphatic hydrocarbon group having from 1 to 10 carbon atoms and optionally having a substituent).

[Chemical Formula 3]

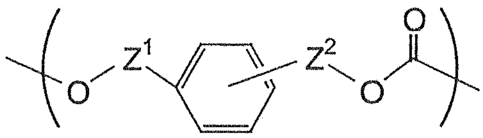 (1)

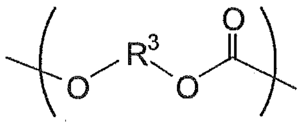 (3)

(wherein $Z^1$ and $Z^2$ like in the above, each independently represent a divalent aliphatic hydrocarbon group having from 1 to 10 carbon atoms and optionally having a substituent; $R^3$ represents a divalent hydrocarbon group having from 3 to 20 carbon atoms and optionally having a substituent).

<Polycarbonate Polyol (a-1)>

The polycarbonate polyol (a-1) has a recurring unit represented by the formula (1).
$Z^1$ and $Z^2$ in the formula (1) each are a divalent aliphatic hydrocarbon group having from 1 to 10 carbon atoms and optionally having a substituent, in which the substituent is preferably one not participating in urethanation and may contain a hetero atom or an ester bond in the carbon chain thereof and may contain an alicyclic structure, an ether bond or the like.
Specific examples of the divalent aliphatic hydrocarbon group having from 1 to 10 carbon atoms and optionally having a substituent includes a methylene group, an ethylene group, a trimethylene group, a propane-1,2-diyl group, a tetramethylene group, a butane-1,3-diyl group, a tetramethylene group, a butane-1,3-diyl group, a pentamethylene group, a hexamethylene group, a heptamethylene group, an octamethylene group, a decamethylene group, a 1-octamethylene group, etc. Of those, preferred are linear or branched alkanediyl groups each having from 1 to 4 carbon atoms.
Preferably, the bonds $Z^1$ and $Z^2$ each are a 1,4-bond (para-form) or a 1,3-bond (meta-form), more preferably a 1,4-bond (para-form).
A more preferred polycarbonate polyol (a-1) is represented by the following formula (2):

[Chemical Formula 4]

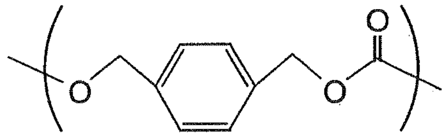

(2)

The number, the content and the number-average molecular weight of the recurring units represented by the formula (1) or (2) in the polycarbonate polyol (a) are as mentioned below from the viewpoint of the mechanical performance, the hydrolysis resistance, the heat resistance and the weather resistance of the polymer, and of the applicability thereof in various fields.

The number of the recurring units represented by the formula (1) or (2) is preferably from 1 to 18, more preferably from 2 to 13.

The number-average molecular weight of the polycarbonate polyol (a-1) is preferably from 200 to 3,000, more preferably from 300 to 2, 000, even more preferably from 400 to 1,000. When the number-average molecular weight is at most 3,000, then the disadvantage that the melting point of the polymer may be too high and the polymer may be difficult to handle can be evaded. When the number-average molecular weight is at least 200, then the number of the necessary carbonate bonds can be secured and the polycarbonate polyol (a-1) can smoothly express its properties.

The polycarbonate polyol (a-1) can be produced through reaction of an aromatic diol compound and a carbonate or phosgene or the like, according to a known method such as a carbonate method, a phosgene method, etc. Of those, preferred is a carbonate method.

As the carbonate method, for example, preferred is the following production method A.

The production method A is, as shown by the reaction formula mentioned below, a method of producing a polycarbonate polyol (a'-1) through transesterification of an aromatic dihydroxyl compound (a-1-1) and a carbonate (a-1-2) in the presence or absence of a catalyst.

For the production method A, a reaction case of using 1,4-benzenedimethanol as the aromatic dihydroxyl compound (a-1-1) is shown above, for which, however, other cases of using any other aromatic dihydroxyl compound can be attained in the same manner.

[Chemical Formula 5]

[Production Method A]

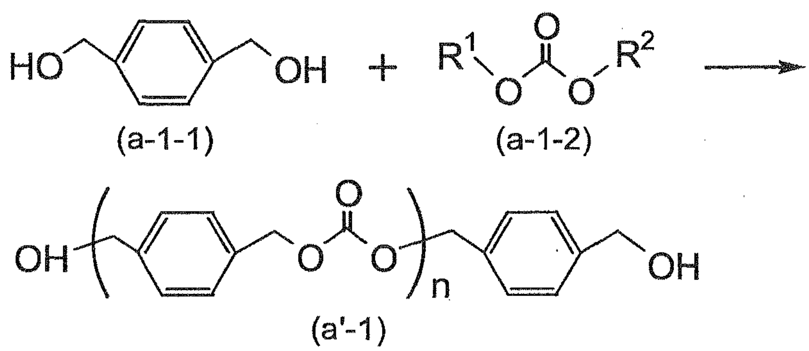

In the above-mentioned formula for the production method A, $R^1$ and $R^2$ each independently represent a hydrocarbon group optionally having a substituent, and preferably a hydrocarbon group having from 1 to 6 carbon atoms. n indicates a recurring unit number and is preferably from 1 to 18, more preferably from 2 to 13.

In the above production method A, alcohols ($R^1OH$, $R^2OH$, etc.) derived from the carbonate (a-1-2) may form as by-products during transesterification, and preferably, therefore, the reaction is promoted with removing them through distillation or the like. In the above production method A, an alkylene carbonate such as ethylene carbonate or the like may be used in place of the carbonate (a-1-2); in this case, however, alkylene carbonate-derived glycols may form as by-products, and preferably, therefore, the reaction is promoted with removing them through distillation or the like.

The details of the aromatic dihydroxyl compound (a-1-1), the carbonate (a-1-2) and the transesterification will be described

below.

<Polycarbonate Polyol (a-2)>

The polycarbonate polyol (a-2) in the present invention is a polycarbonate polyol copolymer having a recurring unit represented by the following formula (1) and a recurring unit represented by the following formula (3), and is preferably a polycarbonate diol copolymer.

[Chemical Formula 6]

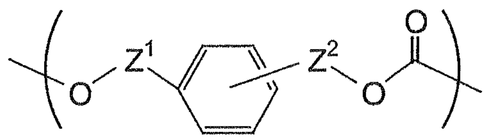

(1)

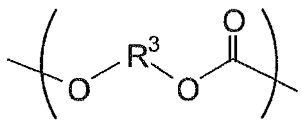

(3)

In the formula (1), $Z^1$ and $Z^2$ are the same as above.
In the formula (3), $R^3$ represents a divalent hydrocarbon group having from 3 to 20 carbon atoms and optionally having a substituent, in which the substituent is preferably one not participating in urethanation and may contain a hetero atom or an ester bond in the carbon chain thereof and may contain an alicyclic structure, an ether bond or the like.
Specific examples of $R^3$ includes a trimethylene group, a propane-1,2-diyl group, a tetramethylene group, a butane-1,3-diyl group, a pentamethylene group, a hexamethylene group, a 3-methylpentane-1,5-diyl group, an octamethylene group, a decamethylene group, a dodecamethylene group, a tetradecamethylene group, a hexadecamethylene group, an octadecamethylene group, a cyclohexane group, etc. Of those, preferred are linear or branched alkanediyl groups each having from 3 to 14 carbon atoms, preferably from 3 to 6 carbon atoms.
In the polycarbonate polyol (a-2), the molar ratio of [(recurring units represented by formula (1))/(recurring units represented by formula (3)] is preferably from 1/9 to 9/1, more preferably from 1/5 to 5/1, even more preferably from 1/3 to 3/1, from the viewpoint of the dispersibility of the resin in an aqueous medium and of the strength of the coating film.
The number, the content and the number-average molecular weight of the recurring units represented by the formulae (1) and (3) for the polycarbonate polyol (a-2) are as mentioned below from the viewpoint of the mechanical performance, the hydrolysis resistance, the heat resistance and the weather resistance of the polymer, and of the applicability thereof in various fields.
The recurring unit represented by the formula (1) and the recurring unit represented by the formula (3) may be block-copolymerized or random-copolymerized.
The number of the recurring units represented by the formula (1) is preferably from 1 to 20, more preferably from 2 to 15; and the content of the recurring units in the polycarbonate polyol (a-2) is preferably from 10 to 90 mol%, more preferably from 25 to 75 mol%.
The number of the recurring units represented by the formula (3) is preferably from 1 to 30, more preferably from 2 to 20; and the content of the recurring units in the polycarbonate polyol (a-2) is preferably from 10 to 90 mol%, more preferably from 25 to 75 mol%.
The number-average molecular weight of the polycarbonate polyol (a-2) is preferably from 200 to 3,000, more preferably from 300 to 2,000, even more preferably from 900 to 1,500. When the number-average molecular weight is at most 3,000, then the disadvantage that the melting point of the polymer may be too high and the polymer may be difficult to handle can be evaded. When the number-average molecular weight is at least 200, then the number of the necessary carbonate bonds can be secured and the polycarbonate polyol (a-2) can smoothly express its properties.
Preferably, the polycarbonate polyol (a-2) have the following physical properties.
The Hazen unit (APHA) as defined in JIS K 0071-1 based on JIS K 1557 is preferably at most 200, more preferably at most 100, even more preferably at most 70, still more preferably from 1 to 60.

The hydroxyl value is preferably from 35 to 600 mg KOH/g, more preferably from 50 to 400 mg KOH/g, even more preferably from 100 to 150 mg KOH/g, still more preferably from 110 to 130 mg KOH/g.
The acid value is preferably at most 1 mg KOH/g, more preferably at most 0.1mg KOH/g, even more preferably from 0.01 to 0.05 mg KOH/g.
The melting point is preferably from -100 to +250°C, more preferably from -80 to +200°C, even more preferably from -20 to +170°C, still more preferably from 0 to 160°C.
The glass transition point is preferably from -80 to +50°C, more preferably from -60 to +20°C, even more preferably from -55 to -20°C.
The viscosity is preferably from 10 to 10,000 cp (75°C), more preferably from 50 to 5, 000 cp (75°C), even more preferably from 100 to 1,500 cp (75°C).

As a production method for the polycarbonate polyol (a-2), there may be mentioned a method of reacting an aromatic polyol compound and a dihydroxyl compound with a carbonate or phosgene or the like, according to a known method such as a carbonate method, a phosgene method or the like. Of those, preferred is a carbonate method.
As the carbonate method, for example, preferred is the following production method B.
The production method B is a method of producing a polycarbonate polyol (a'-2) through transesterification of an aromatic dihydroxyl compound (a-1-1) and a carbonate (a-1-2) with a dihydroxyl compound (a-1-3) in the presence or absence of a catalyst.

For the production method B, a reaction case of using 1,4-benzenedimethanol as the aromatic dihydroxyl compound is shown above, for which, however, other cases of using any other aromatic dihydroxyl compound can be attained in the same manner.
In the reaction formula of the production method B shown below, only a case where the constitutive unit derived from the aromatic dihydroxyl compound (a-1-1) exists at both terminals is described for the polycarbonate polyol (a'-2), for expressing the reaction formula in a simplified manner. However, the terminals are not limited to the constitutive unit derived from the aromatic dihydroxyl compound (a-1-1).

[Chemical Formula 7]

[Production Method B]

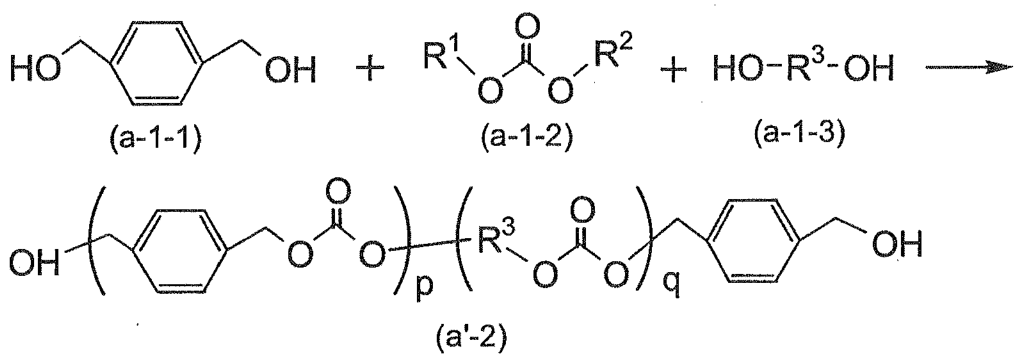

In the above formula for the production method B, $R^1$ and $R^2$ like in the above, each independently represent a hydrocarbon group optionally having a. substituent, and preferably a hydrocarbon group having from 1 to 6 carbon atoms. $R^3$ represents, like in the above, a divalent hydrocarbon group having from 3 to 20 carbon atoms and optionally having a substituent. p indicates a recurring unit number and is preferably from 1 to 20, more preferably from 2 to 15. q indicates a recurring unit number and is preferably from 1 to 30, more preferably from 2 to 20.
In the above production method B, alcohols ($R^1OH$, $R^2OH$, etc.) derived from the carbonate (a-1-2) may form as by-products during transesterification, and preferably, therefore, the reaction is promoted with removing them through distillation or the like. In the above production method B, an alkylene carbonate such as ethylene carbonate or the like may be used in place of the carbonate (a-1-2); in this case, however, alkylene carbonate-derived glycols may form as by-products, and preferably, therefore, the reaction is promoted with removing them through distillation or the like.

(Aromatic Dihydroxyl Compound (a-1-1))

The aromatic dihydroxyl compound (a-1-1) usable here is represented by the following formula (4):

[Chemical Formula 8]

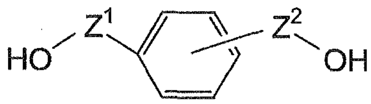

(4)

In the formula, $Z^1$ and $Z^2$ each independently represent a divalent aliphatic hydrocarbon group having from 1 to 10 carbon atoms and optionally having a substituent; and its specific examples and preferred examples are as mentioned above, and preferred is a linear or branched divalent aliphatic hydrocarbon group having from 1 to 4 carbon atoms.

Preferably, $Z^1$ and $1Z^2$ each are 1,4-bonding (para-form) or 1,3-bonding (meta-form), more preferably 1,4-bonding (para-form).

Especially preferably, the aromatic dihydroxyl compound (a-1-1) is a compound having a linear or branched divalent aliphatic hydrocarbon group having from 1 to 4 carbon atoms, such as 1,4-benzenedimethanol, 1,4-benzenediethanol, 1,4-benzenedipropanol, 1,4-benzenedibutanol, 1,3-benzenedimethanol, 1,3-benzenediethanol, 1,3-benzenedipropanol, 1,3-benzenedibutanol, 4-(4-hydroxymethylphenyl)butanol, 3-[4-(2-hydroxyethyl)phenyl]propanol, etc.

(Carbonate (a-1-2))

The carbonate (a-1-2) usable here is not specifically defined, for which, preferably selected is one that may make it possible to efficiently remove the carbonate-derived by-products, alcohols. For example, there are mentioned dialkyl carbonates, diaryl carbonate, alkylene carbonates, etc.

As the dialkyl carbonate, preferred are those in which the alkyl group has from 1 to 6 carbon atoms, preferably from 1 to 4 carbon atoms, concretely including dimethyl carbonate, diethyl carbonate, etc.

The diaryl carbonate includes diphenyl carbonate, etc.

As the alkylene carbonate, preferred are those having an alkanediyl group with from 2 to 4 carbon atoms, concretely including ethylene carbonate, propylene carbonate, butylene carbonate, etc. Of those, preferred are dialkyl carbonates in which the alkyl group has from 1 to 4 carbon atoms, from the viewpoint of the easiness in removing the by-products, alcohols, more preferred is dimethyl carbonate or diethyl carbonate, and most preferred is dimethyl carbonate.

(Dihydroxyl Compound (a-1-3))

The dihydroxyl compound (a-1-3) usable here is not specifically defined. For example, there are mentioned alkanediols having from 3 to 20 carbon atoms (for the case where $R^3$ is a divalent aliphatic hydrocarbon group having from 3 to 20 carbon atoms), those of the alkanediols where the carbon chain of the alkylene group moiety is branched, those of the alkanediols where the carbon chain of the alkylene group moiety contains an alicyclic structure or an ether bond, etc.

The alkanediol having from 3 to 20 carbon atoms, preferably having from 3 to 14 carbon atoms includes 1,3-propanediol, 1,4-butanediol, 1,5-pentanediol, 1,6-hexanediol, 1,7-pentanediol, 1,8-octanediol, 1,9-nonanediol, 1,10-decanediol, 1,12-dodecanediol, etc.

The compound in which the carbon chain of the alkylene group moiety is branched includes 1,3-butanediol, 3-methylpentane-1,5-diol, 2-ethylhexane-1,6-diol, neopentylglycol, 2-methyl-1,8-octanediol, etc.

The compound in which the carbon chain of the alkylene group moiety contains an alicyclic structure includes 1,3-cyclohexanediol, 1,4-cyclohexanediol, 2,2'-bis(4-hydroxycyclohexyl)propane, 1,4-cyclohexanedimethanol, etc.

The compound in which the carbon chain of the alkylene group moiety contains an ether bond includes diethylene glycol, triethylene glycol, tetraethylene glycol, polyethylene glycol, dipropylene glycol, polypropylene glycol, polytetramethylene glycol, etc.

Of the above, more preferred as the dihydroxyl compound (a-1-3) are alkanediols having from 4 to 8 carbon atoms, especially from 4 to 6 carbon atoms such as 1,4-butanediol, 1,5-pentanediol, 1,6-hexanediol, etc.; and diols containing an alicyclic structure with from 5 to 8 carbon atoms such as 1,4-cyclohexanedimethanol, etc.

(Catalyst)

As the catalyst usable in the above reaction, there may be mentioned a catalyst usable in ordinary transesterification (transesterification catalyst). For example, preferably mentioned are an alkali metal compound, an alkaline earth metal compound, an aluminium compound, a zinc compound, a manganese compound, a nickel compound, an antimony compound, a zirconium compound, a titanium compound, an organic tin compound.
The alkali metal compound includes alkali metal hydroxides (lithium hydroxide, sodium hydroxide, potassium hydroxide, etc.), alkali metal carbonates (lithium carbonate, sodium carbonate, potassium carbonate, etc.), alkali metal carboxylates (lithium acetate, sodium acetate, potassium acetate, etc.), alkali metal alkoxides (lithium methoxide, sodium methoxide, potassium t-butoxide, etc.), etc.; and the alkaline earth metal compound includes alkaline earth metal hydroxides (magnesium hydroxide, etc.), alkaline earth metal alkoxides (magnesium methoxide, etc), etc.
The aluminium compound includes aluminium alkoxides (aluminium ethoxide, aluminium isopropoxide, aluminium sec-butoxide, etc.), and other aluminium compounds such as aluminium acetylacetonates, etc.
The zinc compound includes zinc carboxylates (zinc acetate, etc.), zinc acetylacetonate, etc.; the manganese compound includes manganese carboxylates (manganese acetate, etc.), manganese acetylacetonate, etc.; the nickel compound includes nickel carboxylates (nickel acetate, etc.), nickel acetylacetonate, etc.
The antimony compound includes antimony carboxylates (antimony acetate, etc.), antimony alkoxides, etc.; the zirconium compound includes zirconium alkoxides (zirconium propoxide, zirconium butoxide, etc.), zirconium acetylacetonate, etc.
The titanium compound includes titanium alkoxides (titanium tetraethoxide, titanium tetrapropoxide, titanium tetrabutoxide, tetracyclohexyl titanate, tetrabenzyl titanate, etc.), titanium acylates (tributoxytitanium stearate, isopropoxytitanium stearate, etc.), titanium chelates (diisopropoxytitanium bisacetylacetonate, dihydroxy-bislactatotitanium, etc.), etc.
The organic tin compound includes dibutyltin oxide, dibutyltin diacetate, dibutyltin dilaurate, etc.
The carboxylates are preferably those having from 2 to 30 carbon atoms, more preferably from 2 to 18 carbon atoms; and in the alkoxides, the carbon number of the alkoxy group is preferably from 1 to 30, more preferably from 2 to 18.
Of the above-mentioned catalysts, preferred are titanium compounds and organic tin compounds; more preferred are titanium compounds; and even more preferred are titanium alkoxides. Of titanium alkoxides, more preferred are titanium tetraethoxide, titanium tetrapropoxide, titanium tetrabutoxide, and even more preferred is titanium tetrabutoxide.
Regarding the above-mentioned aromatic dihydroxyl compound (a-1-1), carbonate (a-1-2), dihydroxyl compound (a-1-3) and catalyst, one type alone or two or more different types of the compounds may be used here either singly or as combined.

(Transesterification)

The transesterification may be attained in the presence or absence of the catalyst, but from the viewpoint of the reaction efficiency, the reaction is preferably attained in the presence of the catalyst.
The reaction temperature and the reaction pressure in the transesterification may vary depending on the type of the carbonate (a-1-2) and the dihydroxyl compound (a-1-3) to be used. Preferably, in the production method A, the condition is such that the aromatic dihydroxyl compound (a-1-1) such as 1,4-benzenedimethanol or the like could not substantially evaporate away under the condition; and in the production method B, the condition is preferably such that the aromatic dihydroxyl compound (a-1-1) and the dihydroxyl compound (a-1-3) could not substantially evaporate away under the condition. The reaction temperature is preferably from 90 to 230°C, and the reaction pressure is preferably from normal pressure to a reduced pressure of from 30 to 500 mmHg. The reaction may be attained in an atmosphere or a vapor current of air, carbon dioxide gas or an inert gas (nitrogen, argon, helium, etc.), but is preferably attained in an inert gas atmosphere or current.
The amount of the catalyst, when used, is preferably from 1 to 20,000 ppm, more preferably from 10 to 5,000 ppm, even more preferably from 100 to 4, 000 ppm by mass of the catalyst relative to the total feeding amount of the aromatic dihydroxyl compound (a-1-1) and the carbonate (a-1-2) at the start of the reaction in the production method A, or relative to the total feeding amount of the aromatic dihydroxyl compound (a-1-1), the carbonate (a-1-2) and the dihydroxyl compound (a-1-3) at the start of the reaction in the production method B, from the viewpoint of the reactivity.
The polycarbonate polyol (a-2) may also be obtained through transesterification of a high-molecular polycarbonate polyol obtained through reaction of a dihydroxyl compound (a-1-3) and a carbonate (a-1-2), with an aromatic dihydroxyl compound (a-1-1) such as 1,4-benzenedimethanol or the like, in the presence or absence of a catalyst.
Further, the polycarbonate polyol (a-2) may also be obtained through transesterification of a high-molecular polycarbonate polyol obtained through reaction of an aromatic dihydroxyl compound (a-1-1) such as 1,4-benzenedimethanol or the like and a carbonate (a-1-2), with a dihydroxyl compound (a-1-3) in the presence or absence of a catalyst.
The mean molecular weight of the polycarbonate polyols (a-1) and (a-2) for use in the present invention may be controlled by changing the reaction molar ratio of the aromatic dihydroxyl compound (a-1-1), the carbonate (a-1-2)

and the dihydroxyl compound (a-1-3) to be used.
When the mean molecular weight of the formed polycarbonate polyol (a-1) or (a-2) is smaller than the intended mean molecular weight thereof, then the aromatic dihydroxyl compound (a-1-1) and/or the dihydroxyl compound (a-1-3) may be further evaporated away under reduced pressure, but on the contrary, when the mean molecular weight thereof is larger than the intended mean molecular weight, then the aromatic dihydroxyl compound (a- 1-1) and/or the dihydroxyl compound (a-1-3) may be added to further continue the transesterification, thereby giving the polycarbonate polyol (a-1) or (a-2) having the intended mean molecular weight.
The constitutive molar ratio of the recurring units of the polycarbonate polyol (a-2) in the present invention may be controlled by changing the molar ratio of the aromatic dihydroxyl compound (a-1-1) and the dihydroxyl compound (a-1-3).

(Acid Group-Containing Polyol (b))

As the acid group-containing polyol (b) (hereinafter this may be referred to as "ingredient (b)") for use in the present invention, there may be mentioned a compound having two or more hydroxyl groups and one or more carboxyl group (s) in one molecule, and a polyol compound having an acid group such as a sulfonyl group, a phosphoric acid group, a phenolic hydroxyl group or the like. Of those, preferred is a compound having two hydroxyl groups and one carboxyl group in one molecule.
Specific examples of the acid group-containing polyol (b) include dimethylolalkanoic acids such as 2,2-dimethylolpropionic acid, 2,2-dimethylolbutanoic acid, etc.; N,N-bishydroxyethylglycine, N,N-bishydroxyethylalanine, 3,4-dihydroxybutanesulfonic acid, 3,6-dihydroxy-2-toluenesulfonic acid, etc. Of those, preferred are dimethylolalkanoic acids from the viewpoint of the availability thereof, and more preferred is 2,2-dimethylolpropionic acid.
For the acid group-containing polyol (b), one or more different types of the compounds may be used either singly or as combined.

((Polyol (c) except Ingredient (a) and Ingredient (b))

In the present invention, as the other polyol (c) than the ingredient (a) and the ingredient (b) (hereinafter this may be simply referred to as "polyol (c) "), further usable is, for example, a high-molecular diol or a low-molecular diol. The high-molecular diol usable here is not specifically defined, including, for example, polycarbonate diols, polyester diols, polyether diols, acrylic diols, polyether polyester polyols having an ether bond and an ester bond, etc.
The polycarbonate diol includes, for example, polytetramethylene carbonate diol, polyhexamethylene carbonate diol, etc.
The polyester diol includes, for example, polyethylene adipate diol, polybutylene adipate diol, polyethylene-butylene adipate diol, polyhexamethylene isophthalate adipate diol, polyethylene succinate diol, polybutylene succinate diol, polyethylene sebacate diol, polybutylene sebacate diol, poly-s-caprolactonediol, poly(3-methyl-1,5-pentylene adipate) diol, polycondensate of 1,6-hexanediol and dimeric acid, etc.
The polyether diol includes, for example, polyethylene glycol, polypropylene glycol, polytetramethylene glycol, random copolymer or block copolymer of ethylene oxide and propylene oxide, or ethylene oxide and butylene oxide, etc.
The low-molecular diol usable here is not also specifically defined, including, for example, aliphatic diols having from 2 to 9 carbon atoms, such as ethylene glycol, 1,3-propanediol, 2-methyl-1,3-propanediol, 2,2-dimethyl-1,3-propanediol, 2-butyl-2-ethyl-1,3-propanediol, 1,4-butanediol, 1,5-pentanediol, 3-methyl-1,5-pentanediol, 1,6-hexanediol, 1,9-nonanediol, 2-methyl-1,8-octanediol, diethylene glycol, triethylene glycol, tetraethylene glycol, etc.; alicyclic structure-having diols having from 6 to 12 carbon atoms, such as 1,4-cyclohexanedimethanol, 1,3-cyclohexanedimethanol, 1,4-cyclohexanediol, 1,4-bis(hydroxyethyl)cyclohexane, 2,7-norbornanediol, tetrahydrofuran-dimethanol, 2,5-bis(hydroxymethyl)-1,4-dioxane, etc.; low-molecular polyalcohols such as trimethylolpropane, pentaerythritol, sorbitol, etc.
For the polyol (c), one or more different types of the compounds may be used either singly or as combined.
In the present invention, preferably, the total hydroxyl equivalent number of the polycarbonate polyol (a), the acid group-containing polyol (b) and the polyol (c) is from 70 to 270. In consideration of actual production of the polyurethane resin aqueous dispersion, the hydroxyl group equivalent amount is preferably at least 70. When the hydroxyl group equivalent amount is at most 270, then the hardness of the coating film to be formed by coating with the obtained polyurethane resin aqueous dispersion does not lower.
The hydroxyl group equivalent amount is preferably from 130 to 270, more preferably from 160 to 265, even more preferably from 180 to 260, from the viewpoint of the hardness of the coating film formed by coating with the obtained polyurethane resin aqueous dispersion.
The hydroxyl group equivalent number may be computed according to the following formula:

Hydroxyl group equivalent number of each polyol = (molecular weight of each polyol)/(number of OH groups in each polyol)

Total hydroxyl group equivalent number = M/(total molar number of polyols)

In the above formula, M indicates [[(hydroxyl group equivalent number of polycarbonate polyol (a)) x (molar number of polycarbonate polyol (a))] + [(hydroxyl group equivalent number of acid group-containing polyol (b)) x (molar number of acid group-containing polyol (b))] + [(hydroxyl group equivalent number of polyol (c)) x (molar number of polyol (c))]].

(Polyisocyanate Compound (d))

The polyisocyanate compound (d) for use in the present invention is not specifically defined. Its specific examples include aromatic polyisocyanate compounds such as 1,3-phenylene diisocyanate, 1,4-phenylene diisocyanate, 2,4-tolylene diisocyanate (TDI), 2,6-tolylene diisocyanate, 4,4'-diphenylenemethane diisocyanate (MDI), 2,4-diphenylmethane diisocyanate, 4,4'-diisocyanatobiphenyl, 3,3'-dimethyl-4,4'-diisocyanatobiphenyl, 3,3'-dimethyl-4,4'-diisocyanatodiphenylmethane, 1,5-naphthylene diisocyanate, 4,4',4"-triphenylmethane triisocyanate, m-isocyanatophenylsulfonyl isocyanate, p-isocyanatophenylsulfonyl isocyanate, etc.; aliphatic polyisocyanate compounds such as ethylene diisocyanate, tetramethylene diisocyanate, hexamethylene diisocyanate (HDI), dodecamethylene diisocyanate, 1,6,11-undecane triisocyanate, 2,2,4-trimethylhexamethylene diisocyanate, lysine diisocyanate, 2,6-diisocyanatomethyl caproate, bis(2-isocyanatoethyl) fumarate, bis(2-isocyanatoethyl carbonate, 2-isocyanatoethyl-2,6-diisocyanatohexanoate, etc.; alicyclic polycyanate compounds such as isophorone diisocyanate (IPDI), 4,4'-dicyclohexylmethane diisocyanate (hydrogenated MDI), cyclohexylene diisocyanate, methylcyclohexylene diisocyanate (hydrogenated TDI), bis(2-isocyanatoethyl)-4-cyclohexene-1,2-dicarboxylate, 2,5-norbornane diisocyanate, 2,6-norbornane diisocyanate, etc.
The number of the isocyanate groups per molecule of the polyisocyanate compound is generally 2, but within a range within which the polyurethane resin does not gel, a polyisocyanate compound having 3 or more isocyanate groups, such as triphenylmethane triisocyanate, may also be used here.
Of those compounds, preferred are 4,4'-diphenylenemethane diisocyanate (MDI), isophorone diisocyanate (IPDI) and 4,4'-dicyclohexylmethane diisocyanate (hydrogenated MDI), from the viewpoint of reactivity control, elasticity impartation, etc.
For the polyisocyanate compound (d), one type alone or two or more different types of the compounds may be used either singly or as combined.

(Chain Extender (B))

In the present invention, usable is a chain extender (B) having reactivity with the isocyanate group of the polyurethane prepolymer (A). The chain extender includes, for example, amine compounds such as ethylenediamine, 1,4-tetramethylenediamine, 2-methyl-1,5-pentanediamine, 1,4-butanediamine, 1,6-hexamethylenediamine, 1,4-hexamethylenediamine, 3-aminomethyl-3,5,5-trimethylcyclohexylamine, 1,3-bis(aminomethyl)cyclohexane, xylylenediamine, piperazine, 2,5-dimethylpiperazine, diethylenetriamine, triethylenetetramine, etc.; diol compounds such as ethylene glycol, propylene glycol, 1,4-butanediol, 1,6-hexanediol, etc.; polyalkylene glycols such as typically polyethylene glycol; water, etc. Above all, preferred are primary diamine compounds.
For the chain extender (B), one type alone or two or more different types of the compounds may be used either singly or as combined.

[Polyurethane Resin]

The polyurethane resin for use in the present invention may be obtained according to any of the following methods.

(i) A method of reacting a polycarbonate polyol (a) and a polyisocyanate compound (d).
(ii) A method of reacting a polycarbonate polyol (a), an acid group-containing polyol (b) and a polyisocyanate compound (d).
(iii) A method of reacting a polycarbonate polyol (a), an acid group-containing polyol (b), a polyol (c) and a polyisocyanate compound (d).
(iv) A method of reacting a polycarbonate polyol (a), a polyisocyanate compound (d) and a chain extender (B).
(v) A method of reacting a polycarbonate polyol (a), an acid group-containing polyol (b), a polyisocyanate compound (d) and a chain extender (B).
(vi) A method of reacting a polycarbonate polyol (a), an acid group-containing polyol (b), a polyol (c), a polyisocyanate compound (d) and a chain extender (B).

The reaction temperature for the polyol ingredient and the polyisocyanate compound (d) is preferably from 40 to 150°C, more preferably from 60 to 120°C; and the reaction temperature for the polyol (a) and the chain extender (B) is generally from 0 to 80°C, preferably from 0 to 60°C.
The details of the reaction condition and others will be described in the section of the production method for polyurethane resin aqueous dispersion to be given below.
The obtained polyurethane resin may be dispersed in an aqueous medium to be the polyurethane resin aqueous dispersion of the present invention.
The aqueous medium includes, for example, water, a mixed medium of water and a hydrophilic organic solvent, etc.
Water includes tap water, ion-exchanged water, distilled water, ultrapure water, etc.; and preferred is ion-exchanged water from the viewpoint of the availability thereof and for preventing the particles from being unstable owing to the influence of salts thereon.
The hydrophilic organic solvent includes lower monoalcohols such as methanol, ethanol, propanol, etc.; polyalcohols such as ethylene glycol, glycerin, etc.; aprotic hydrophilic organic solvents such as N-methylmorpholine, dimethyl sulfoxide, dimethylformamide, N-methylpyrrolidone, etc. The amount of the hydrophilic organic solvent in the mixed medium is preferably from 0 to 20% by mass.
The proportion of the polyurethane resin in the polyurethane resin aqueous dispersion is preferably from 5 to 60% by mass, more preferably from 20 to 50% by mass.

[Production Method for Polyurethane Resin Aqueous Dispersion]

The production method for the polyurethane resin aqueous dispersion of the present invention is not specifically defined, but according to the method including the following steps (1) to (3) and optionally including the following step (4), the dispersion may be produced efficiently.

Step (1) : a step of reacting a polycarbonate polyol (a) at least having a recurring unit represented by the following formula (1), an acid group-containing polyol (b), and a polyisocyanate compound (d) to give a polyurethane prepolymer (A):

[Chemical Formula 9]

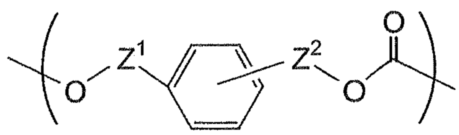

(1)

(wherein $Z^1$ and $Z^2$ are as mentioned above).
Step (2): a step of neutralizing the acid group of the polyurethane prepolymer (A).
Step (3): a step of dispersing the polyurethane prepolymer (A) in an aqueous medium.
Step (4) : a step of reacting the polyurethane prepolymer (A) dispersed in an aqueous medium, and a chain extender (B) having reactivity with the isocyanate group in the polyurethane prepolymer (A) to give a polyurethane resin

aqueous dispersion.

In the present invention, preferably, the steps (1) to (4) are carried out in order from the viewpoint of the operability of the process, but the step (2) and the step (3) may be carried out simultaneously, or the step (3) and the step (4) may be carried out simultaneously.
The steps of the production method of the present invention are described below.

<Step (1)>

The step (1) is a step of reacting a polycarbonate polyol (a) at least having a recurring unit represented by the above-mentioned formula (1), an acid group-containing polyol (b), optionally a polyol (c), and a polyisocyanate compound (d) to give a polyurethane prepolymer (A):

The step (1) may be carried out in the presence or absence of a catalyst. The catalyst includes, for example, salts of metal and organic or inorganic acid such as tin catalysts (trimethyltin laurate, dibutyltin dilaurate, etc.), lead catalysts (lead octylate, etc.), etc.; organic metal derivatives, amine catalysts (triethylamine, N-ethylmorpholine, triethylenediamine, etc.); diazabicycloundecene catalysts, etc. Of those, preferred is dibutyltin dilaurate from the viewpoint of the reactivity thereof.

The reaction of the step (1) may be attained with no solvent or in the presence of an organic solvent. The organic solvent includes acetone, methyl ethyl ketone, methyl isobutyl ketone, tetrahydrofuran, dioxane, dimethylformamide, dimethylsulfoxide, N-methylpyrrolidone, N-ethylpyrrolidone, ethyl acetate, etc. Of those, preferred are acetone, methyl ethyl ketone and ethyl acetate since they may be removed by heating under reduced pressure after dispersion of polyurethane prepolymer in water and after chain extension reaction thereof; and also preferred are N-methylpyrrolidone and N-ethylpyrrolidone since they act as a film forming aid in forming a film of the obtained polyurethane resin aqueous dispersion.
The step (1) may be carried out in an inert gas atmosphere, or in an air atmosphere.
The reaction temperature is preferably from 40 to 150°C, more preferably from 60 to 120°C. When the reaction temperature is lower than 40°C, the starting materials could not dissolve or the obtained urethane prepolymer (A) could not be sufficiently stirred as its viscosity would be too high; but when the reaction temperature is higher than 150°C, then there may occur some troubles of side reaction, etc.
The proportion of each ingredient in the step (1) is as follows, based on the total, 100 parts by mass of the polycarbonate polyol (a), the acid group-containing polyol (b) and the polyol (c).
The proportion of the polycarbonate polyol (a) is preferably from 60 to 95 parts by mass, more preferably from 65 to 90 parts by mass, even more preferably from 75 to 90 parts by mass. When the proportion is at least 60 parts by mass, then the hardness of the coating film formed by coating with the obtained polyurethane resin aqueous dispersion would not lower; and when at most 95 parts by mass, then the coating film would not harden.
The proportion of the acid group-containing polyol (b) is preferably from 5 to 40 parts by mass, more preferably from 10 to 30 parts by mass, even more preferably from 10 to 25 parts by mass. When the proportion is at least 10 parts by mass, the obtained polyurethane resin may be excellent in dispersibility in an aqueous medium; and when at most 40 parts by mass, the waterproofness of the coating film formed by coating with the obtained polyurethane resin aqueous dispersion may better.
The proportion of the polyol (c) is preferably from 0 to 30 parts by mass, more preferably from 0 to 10 parts by mass, even more preferably from 0 to 5 parts by mass. When the proportion of the polyol (c) is at most 30 parts by mass, then the necessary amount of the polycarbonate polyol (a) and the acid group-containing polyol (b) in all the polyol ingredients may be secured sufficiently, and accordingly, the hardness of the coating film could be prevented from lowering and the dispersibility of the polyurethane resin could better.
The ratio of the molar number of the isocyanate groups in the polyisocyanate compound (d) to the molar number of all the hydroxyl groups in the polyol ingredients that comprise the polycarbonate polyol (a), the acid group-containing polyol (b) and the polyol (c) is preferably from 1.01 to 2.5, more preferably from 1.2 to 2.2, even more preferably from 1.2 to 2.0.
When the ratio of the molar number of the isocyanate groups in the polyisocyanate compound (d) is at least 1.01, then the proportion of the polyurethane prepolymer (A) not having an isocyanate group at the molecular terminal may be suppressed and therefore the molecules not reacting with the chain extender (B) can be thereby reduced, and accordingly, the strength of the coating film to be formed by coating with the polyurethane resin aqueous dispersion can be prevented from lowering. When the molar ratio is at most 2.5, then the amount of the unreacted polyisocyanate compound (d) remaining in the reaction system may be small, and therefore the side reaction with the chain extender (B) can be thereby reduced, and a phenomenon to form fish eyes through reaction with water to cause molecular prolongation in the coating film to be formed by coating with the polyurethane resin aqueous dispersion of the present invention can be suppressed.

Regarding the reaction between the polyol ingredients comprising the polycarbonate polyol (a), the acid group-containing polyol (b) and the polyol (c), with the polyisocyanate compound (d) for forming the urethane prepolymer (A), the ingredient (a), the ingredient (b) and the ingredient (c) may be reacted with the ingredient (d) in no particular order, or at least two ingredients may be premixed and then reacted with the ingredient (d).

The mean content of the carboxylic acid group in the polyurethane prepolymer (A) obtained in the step (1) is from 2.0 to 13.0% by mass. When the mean content of the carboxyl acid group number is at least 2.0% by mass, then a polyurethane resin aqueous dispersion excellent in dispersibility in an aqueous medium can be obtained. When the mean content of the carboxylic acid group is at most 13.0% by mass, then the waterproofness of the coating film of the obtained polyurethane resin can better.

The "mean content of the carboxylic acid group of the polyurethane prepolymer (A)" is the mean content of the carboxylic acid group in the solid content, as it is called, except the solvent used in producing the polyurethane prepolymer (A) and the neutralizing agent used for dispersing the polyurethane prepolymer (A) in an aqueous medium.

<Step (2)>

The step (2) is a step of neutralizing the acid group of the polyurethane prepolymer (A). The neutralizing agent usable here includes organic amines such as trimethylamine, triethylamine, triisopropylamine, tributylamine, triethanolamine, N-methyldiethanolamine, N-phenyldiethanolamine, dimethylethanolamine, diethylethanolamine, N-methylmorpholine, pyridine, etc.; inorganic alkalis such as sodium hydroxide, potassium hydroxide, etc.; ammonia, etc. Of the above, preferred are organic amines, more preferred are tertiary amines, and most preferred is triethylamine.

<Step (3)>

The step (3) is a step of dispersing the polyurethane prepolymer (A) in an aqueous medium.

The aqueous medium includes those mentioned above.

The method of dispersing the polyurethane prepolymer (A) in an aqueous medium is not specifically defined. For example, there may be mentioned (i) a method of adding an urethane prepolymer or urethane prepolymer solution to an aqueous medium with stirring with a homomixer, a homogenizer or the like; (ii) a method of adding an aqueous medium to an urethane prepolymer with stirring with a homomixer, a homogenizer or the like; etc.

<Step (4)>

The step (4) is a step of reacting the polyurethane prepolymer (A) dispersed in an aqueous medium with the chain extender (B) having reactivity with the isocyanate group in the polyurethane prepolymer (A) to give a polyurethane resin aqueous dispersion.

The reaction temperature in the step (4) is generally from 0 to 80°C, preferably from 0 to 60°C. The reaction may be attained slowly with cooling, or as the case may be, the reaction may be accelerated under a heating condition at 60°C or lower.

The amount of the chain extender (B) to be added here is preferably not higher than the equivalent amount of the isocyanate group that is the start point for chain extension in the obtained urethane prepolymer, more preferably from 0.7 to 0.99 equivalent of the isocyanate group. When the chain extender (B) is added in an amount not higher than the equivalent amount of the isocyanate group, then the molecular weight of the chain-extended urethane polymer may be prevented from lowering and the strength of the coating film to be formed by coating with the obtained polyurethane resin aqueous dispersion can be thereby prevented from lowering.

Regarding the addition thereof, the chain extender (B) may be added after the polyurethane prepolymer has been dispersed in water, or during its dispersion. The chain extension may be attained with water. In this case, water serving as the dispersant additionally serves as the chain extender.

The polyurethane resin aqueous dispersion obtained according to the production method of the present invention is excellent in the dispersibility thereof in an aqueous medium and excellent in the strength of the coating film thereof formed by coating and drying, and has hydrolysis resistance, durability, heat resistance and abrasion resistance.

[Examples]

Next, the present invention is described in more detail with reference to Examples and Comparative Examples.

The physical properties of polycarbonate polyol and the hardness of polyurethane film were measured according to the methods mentioned below.

(1) Number-Average Molecular Weight:

Measured as the polystyrene-equivalent number-average molecular weight through gel permeation chromatography (GPC).

(2) Hydroxyl Value:

Measured according to the method B of JIS K 1557.

(3) Acid Value:

Measured according to the indicator titration method of JIS K 1557.

(4) Water Content:

Measured according to the coulometric titration method with a Karl Fischer moisture titrator.

(5) Melting Point, Glass Transition Temperature:

Measured through differential scanning calorimetric analysis (temperature range in measurement: -100 to 200°C).

(6) Viscosity:

Measured with an E-type viscometer at 75°C.

(7) Measurement of APHA:

Hazen unit (APHA) was determined in the manner mentioned below, according to JIS K 0071-1 based on JIS K 1557.

(Preparation of Standard Solution)

1.245 g of potassium chloroplatinate, 1.000 g of cobalt chloride 6-hydrate, 500 ml of water and 100 ml of hydrochloric acid are put into a one-liter measuring flask, completely dissolved therein, and water is added to the gauge line to prepare a solution. The solution corresponds to an APHA standard solution No. 500, and various standard solutions are prepared by diluting the No. 500 standard solution with water. For example, APHA standard solution No. 100 is prepared by diluting 20.0 m of the No. 500 standard solution with 80.0 ml of water.

(Measurement Method)

A colorless transparent, stoppered flat-bottomed glass tube, which has an equal bottom thickness and has an inner diameter of about 23 mm and of which the stopper is formed of the same material and has the same diameter as that of the tube is prepared, and this is used as a colorimetric tube marked with a gauge line at the same height from the bottom so as to have a liquid amount of about 100 ml therein; and a sample is put into it up to the gauge line, carefully so as not to take bubbles therein. Subsequently, this is put on a white plate along with a suitable APHA standard solution also put in parallel thereto, and the two were checked from the top and compared with each other. The standard solution of which the concentration is the most approximate to that of the sample is determined, and the number of the standard solution is taken as APHA of the sample.

(7) Measurement of Hardness of Polyurethane Film:

A coating film sample is put on a sample stand, and using a pendulum hardness tester (by BYK-Gardner GmbH), the amplitude attenuation time is measured.
A longer amplitude attenuation time means that the hardness of the sample is large.

Production Example 1 [Production of Polycarbonate Diol Copolymer (A)]

199.3 g (2.21 mol) of dimethyl carbonate, 65.2 g (0.47 mol) of 1,4-benzenedimethanol, 167.2 g (1.41 mol) of 1,6-hexanediol and 0.03 g of titanium tetrabutoxide were put into a 500-ml glass-made round-bottomed flask equipped with a rectifier, a stirrer, a thermometer and a nitrogen introducing duct, and transesterified with stirring under normal pressure in a nitrogen current for 5 hours, with a mixture of methanol and dimethyl carbonate kept evaporated away. During this, the reaction temperature was gradually elevated from 95°C up to 200°C, and the composition of the distillate was so controlled as to be the azeotropic composition of methanol and dimethyl carbonate or therearound.
Subsequently, the pressure was gradually reduced down to 100 mmHg, and with removing the mixture of methanol and dimethyl carbonate through evaporation with stirring, the transesterification was further continued for 4 hours at 195°C. After the reaction (after the removal of the mixture of methanol and dimethyl carbonate through evaporation), the reaction liquid was cooled to room temperature thereby giving 280 g of a polycarbonate diol copolymer (A).
The obtained polycarbonate diol copolymer (A) had a number-average molecular weight of 950, APHA of 40, a hydroxyl value of 118 mg KOH/g, an acid value of 0. 02 mg KOH/g, a water content of 32 ppm, a melting point of 33°C, a glass transition point of -50.9°C, and a viscosity of 600 cp (75°C).

Example 1:

(1) Production of Polyurethane Resin Aqueous Dispersion (I):

30.33 g of the polycarbonate diol copolymer (A) obtained in Production Example 1, and 30.07 g of N-methylpyrrolidone were put into a glass-made separable flask having an inner capacity of 500 ml and equipped with a stirrer and a thermometer, and stirred in a hot bath at 65°C, and subsequently, 30.10 g of Sumika Bayer Urethane's Desmodur™ W (4,4'-diisocyanatodicyclohexylmethane) was added thereto at the same temperature, and heated up to 90°C with stirring, and stirred at the same temperature for 90 minutes (inner temperature, 80°C to 85°C). Next, 4.45 g of 2,2-dimethylolpropionic acid and 0.06 g of dibutyltin dilaurate were added thereto and stirred with heating up to 95°C (inner temperature, 90°C to 95°C). After 7 hours, this was cooled to 80°C, and 3.36 g of triethylamine was added thereto for neutralization to give a polyurethane prepolymer.
The polyurethane prepolymer solution was slowly added to and dispersed in water, and 30.30 g of an aqueous solution of 35% 2-methylpentane-1,5-diamine (2-methyl-1,5-pentanediamine) was slowly added to the dispersion, and stirred for 30 minutes to give a polyurethane resin aqueous dispersion (I).
The solid content of the obtained polyurethane resin aqueous dispersion (I) was 20% by mass, the pH thereof was 11.82, and the viscosity thereof was 15.7 cP (20°C).

(2) Formation of Polyurethane Coating Film (I):

The polyurethane resin aqueous dispersion (I) obtained in the above (1) was applied onto a glass substrate, statically left overnight at room temperature, then thermally cured at 60°C for 1 hour and at 120°C for 3 hours, thereby forming a polyurethane coating film (I). The hardness of the obtained polyurethane coating film (I) was 236 seconds as the amplitude attenuation time.

Comparative Example 1:

(1) Production of Polyurethane Resin Aqueous Dispersion (II):

300 g of Ube Kosan' s ETERNACOLL™ "UH-100" (polycarbonate diol prepared from starting materials of 1,6-hexanediol and carbonate, having a molar mass of 1000 g/mol, and a hydroxyl value of 112.2 mg KOH/g), and 257 g of N-methylpyrrolidone were put into a glass-made separable flask having an inner capacity of 1 liter and equipped with a stirrer and a thermometer, and stirred in a hot bath at 60°C, and subsequently, 259.47 g of Sumika Bayer Urethane's Desmodur™ W (4,4'-diisocyanatodicyclohexylmethane) was added thereto at the same temperature, and heated up to 90°C with stirring, and stirred at the same temperature for 90 minutes (inner temperature, 80°C to 85°C). Next, 40.2 g of 2,2-dimethylolpropionic acid and 0.685 g of dibutyltin dilaurate were added thereto and stirred with heating up to 95°C (inner temperature, 90°C to 95°C). After 3 hours, this was cooled to 80°C, and 30.33 g of triethylamine was added thereto for neutralization to give a polyurethane prepolymer.
The polyurethane prepolymer solution was slowly added to and dispersed in water, and 122.88 g of an aqueous solution of 35% 2-methylpentane-1,5-diamine (2-methyl-1,5-pentanediamine) was slowly added to the dispersion, and stirred for 30 minutes to give a polyurethane resin aqueous dispersion (II).
The solid content of the obtained polyurethane resin aqueous dispersion (II) was 30% by mass, the pH thereof was 9.9,

and the viscosity thereof was 30 cP (20°C).

(2) Formation of Polyurethane Coating Film (II):

Using the polyurethane resin aqueous dispersion (II) obtained in the above (1), a polyurethane coating film (II) was formed in the same manner as in Example 1. The hardness of the obtained polyurethane coating film (II) was 168 seconds as the amplitude attenuation time.

[Industrial Applicability]

The polyurethane resin aqueous dispersion of the present invention is excellent in the dispersibility thereof in an aqueous medium and excellent in the strength of the coating film thereof formed by coating and drying. In addition, as having hydrolysis resistance, durability, heat resistance and abrasion resistance and especially excellent in hardness, the polyurethane resin aqueous dispersion is useful as a coating agent and a starting material for coating compositions. According to the production method of the present invention, the polyurethane resin aqueous dispersion having the above-mentioned characteristics can be produced efficiently.

## Claims

1. A polyurethane resin aqueous dispersion of, as dispersed in an aqueous medium, a polyurethane resin obtained through reaction of a polycarbonate polyol (a) at least having a recurring unit represented by the following formula (1) and a polyisocyanate compound (d):
[Chemical Formula 1]

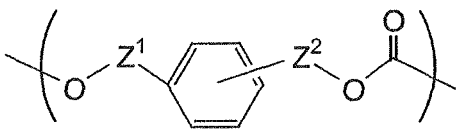

(1)

(wherein $Z^1$ and $Z^2$ each independently represent a divalent aliphatic hydrocarbon group having from 1 to 10 carbon atoms and optionally having a substituent).

2. The polyurethane resin aqueous dispersion according to claim 1, wherein the polyurethane resin is obtained through further reaction with a chain extender (B).

3. The polyurethane resin aqueous dispersion according to claim 1 or 2, wherein the polyurethane resin has an acid group.

4. The polyurethane resin aqueous dispersion according to any of claims 1 to 3, wherein the polyurethane resin is obtained through reaction of a polycarbonate polyol (a) having a recurring unit represented by the above-mentioned formula (1), an acid group-containing polyol (b), a polyisocyanate compound (d) and a chain extender (B).

5. The polyurethane resin aqueous dispersion according to any of claims 1 to 4, wherein the number-average molecular weight of the polycarbonate polyol (a) is from 200 to 3000.

6. The polyurethane resin aqueous dispersion according to any of claims 1 to 5, wherein the recurring unit represented by the formula (1) of the polycarbonate polyol (a) is represented by the following formula (2):
[Chemical Formula 2]

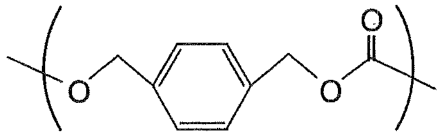

(2)

7. The polyurethane resin aqueous dispersion according to any of claims 1 to 5, wherein the polycarbonate polyol (a) has a recurring unit represented by the following formula (1) and a recurring unit represented by the following formula (3):
[Chemical Formula 3]

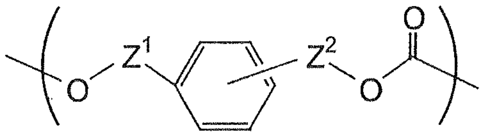

(1)

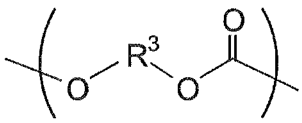

(3)

(wherein $Z^1$ and $Z^2$ are the same as above; and $R^3$ represents a divalent hydrocarbon group having from 3 to 20 carbon atoms and optionally having a substituent).

8. The polyurethane resin aqueous dispersion according to claim 7, wherein the molar ratio of [recurring units represented by formula (1) / recurring units represented by formula (3)] is from 1/9 to 9/1.

9. A method for producing a polyurethane resin aqueous dispersion of any of claims 1 to 8, including the following steps (1) to (3):

Step (1) : a step of reacting a polycarbonate polyol (a) at least having a recurring unit represented by the following formula (1), an acid group-containing polyol (b), and a polyisocyanate compound (d) to give a polyurethane prepolymer (A) ;
Step (2): a step of neutralizing the acid group of the polyurethane prepolymer (A);
Step (3): a step of dispersing the polyurethane prepolymer (A) in an aqueous medium.
[Chemical Formula 4]

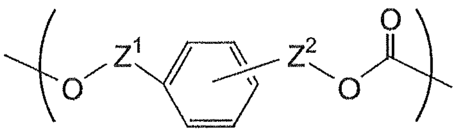

(1)

(wherein $Z^1$ and $Z^2$ each independently represent a divalent aliphatic hydrocarbon group having from 1 to 10 carbon atoms and optionally having a substituent).

10. The method for producing a polyurethane resin aqueous dispersion according to claim 9, further including the following step (4):

Step (4) : a step of reacting the polyurethane prepolymer (A) dispersed in an aqueous medium, and a chain

extender (B) having reactivity with the isocyanate group in the polyurethane prepolymer (A) to give a polyurethane resin aqueous dispersion.

**11.** The method for producing a polyurethane resin aqueous dispersion according to claim 9 or 10, wherein the polycarbonate polyol (a) has a recurring unit represented by the above-mentioned formula (1) and a recurring unit represented by the above-mentioned formula (3).

**INTERNATIONAL SEARCH REPORT**

International application No.
PCT/JP2010/051433

A. CLASSIFICATION OF SUBJECT MATTER
*C08G18/44*(2006.01)i, *C08G18/00*(2006.01)i, *C08G18/66*(2006.01)i

According to International Patent Classification (IPC) or to both national classification and IPC

B. FIELDS SEARCHED

Minimum documentation searched (classification system followed by classification symbols)
C08G18/00-87, C08G64/00-42

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
CA/REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | JP 2007-119749 A (Dai-Ichi Kogyo Seiyaku Co., Ltd.), 17 May 2007 (17.05.2007), claims 1, 2 (Family: none) | 1-11 |
| A | JP 10-120757 A (Nicca Chemical Co., Ltd.), 12 May 1998 (12.05.1998), claims 1, 2 & US 5859122 A & EP 837083 A2 | 1-11 |
| A | JP 3-168251 A (Bayer AG.), 22 July 1991 (22.07.1991), claims; page 4, lower left column, line 11 to lower right column, line 15 & US 5141987 A & EP 427979 A2 & KR 10-0169110 B | 1-11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
30 April, 2010 (30.04.10)

Date of mailing of the international search report
18 May, 2010 (18.05.10)

Name and mailing address of the ISA/
Japanese Patent Office

Facsimile No.

Authorized officer

Telephone No.

Form PCT/ISA/210 (second sheet) (July 2009)

**INTERNATIONAL SEARCH REPORT**

International application No.
PCT/JP2010/051433

C (Continuation). DOCUMENTS CONSIDERED TO BE RELEVANT

| Category* | Citation of document, with indication, where appropriate, of the relevant passages | Relevant to claim No. |
|---|---|---|
| A | JP 39-8699 B1 (The BF Goodrich Co.), 27 May 1964 (27.05.1964), claims; page 1, right column, lines 4 to 10 (Family: none) | 1-11 |
| A | US 3547889 A (E.C. Schuetze), 15 December 1970 (15.12.1970), claims 1 to 14 & GB 1212262 A & DE 1720371 A | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 10120757 A
- JP 6248046 A